# EUROPEAN PATENT SPECIFICATION

(11) **EP 3 904 907 B1**
(45) Date of publication and mention of the grant of the patent: **04.11.2026**
(21) Application number: 20172208.9
(22) Date of filing: 29.04.2020
(51) Int. Cl.: G01S 13/72

(54) **METHODS AND SYSTEMS FOR TRACKING AN OBJECT**
VERFAHREN UND SYSTEME ZUR VERFOLGUNG EINES OBJEKTS
PROCÉDÉS ET SYSTÈMES DE SUIVI D'UN OBJET

(43) Date of publication of application: 03.11.2021
(73) Proprietor: Aptiv Technologies AG, 8200 Schaffhausen (CH)
(72) Inventor: SZLACHETKA, Marek Jacek, 32-440 Sulkowice, Rudnik (PL); OSTROWSKI, Kamil Leonard, 62-004 Kicin (PL)
(74) Representative: Manitz Finsterwald Patent- und Rechtsanwaltspartnerschaft mbB

(56) References cited:
- US-A1- 2020 124 716
- US-B1- 9 921 306

## Description

### FIELD

The present disclosure relates to methods and systems for tracking an object.

### BACKGROUND

Tracking objects, for example determining and updating the location of an object, the heading angle of an object, and/or the type of an object (for example car, truck, bicycle, pedestrian, building, or static road obstacle), is essential for at least partially autonomously driving vehicles.

Accordingly, there is a need to provide reliable and efficient object tracking.

US 9,921,306 B1 discloses an active state estimation system which comprises radar systems for obtaining sensor measurements, data storage devices for storing the sensor measurements, and computer processors in communication with the data storage devices. A memory stores program instructions which cause the computer processors to initialize a system having state variables and also having unknown, multidimensional, arbitrarily time-varying parameters, but which are subject to known bounded values. Sensor measurements for the object being tracked are then received, and applied to an estimating filter that explicitly uses a mean square optimization criterion that separately accounts for measurement errors and said bounding values, to produce estimates of the true state of the system. The system also determines whether a regime change has occurred based on the estimates of the true state of the system, and if so, determines updated known bounded values that are used to update the boundaries used by the system.

US 2020/124716 A1 discloses a method and apparatus for initializing a radar track. The method includes: detecting a target within a field of view where the target having a detected range, radial velocity and azimuth; initializing values of a Kalman filter upon initial detection of the target based upon the detected range, radial velocity and azimuth; generating a azimuth value and estimated azimuth rate value of the target; determining a first estimated error value associated with the azimuth value and a second estimated error value associated with the estimated azimuth rate value based upon the detected azimuth; estimating a cross track error based upon the first and second estimated errors; in response to the estimated cross track error value being lower than a predetermined threshold value, reinitializing the values of the Kalman filter; and establishing a radar track based upon the reinitialzied values of the Kalman filter.

### SUMMARY

The present disclosure provides a computer implemented method, a computer system, a vehicle, and a non-transitory computer readable medium according to the independent claims. Embodiments are given in the subclaims, the description and the drawings.

### DRAWINGS

Exemplary embodiments and functions of the present disclosure are described herein in conjunction with the following drawings, showing schematically:
- Fig. 1: an illustration of a relationship between an amount of data available for initialization and an accuracy of initial estimates;
- Fig. 2: a flow diagram illustrating a method of updating a state of a tracked object without use of a "young" parameter;
- Fig. 3: a flow diagram illustrating a method for updating a state of a tracked object with use of a "young" parameter according to various embodiments; and
- Fig. 4: a flow diagram illustrating a method for tracking an object according to various embodiments.

### DETAILED DESCRIPTION

Tracking methods, for example in radar domain (for example based on radar sensor data) may be based on system modeling and time/measurement filtration or filtering (for example based on a Kalman filter).

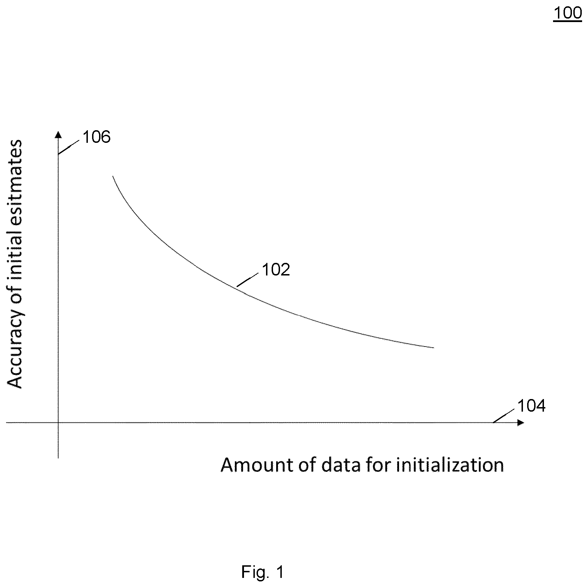

Kalman filters in general do not require initial estimates to be calculated, but in active safety domain, it may be desired to provide initial estimates. Missing initial estimates may lead to long time of convergence of estimated values to real values. For that reason, it may be desired for tracking methods to estimate some initial states of a system at the beginning of the tracking process and then handling them by time and measurement updates afterwards. In general, a tendency can be observed that the more data is available for initialization estimate, then more accurate initial parameter can be estimated, as illustrated in Fig. 1.

Fig. 1 shows an illustration 100 of a relationship (or tendency) between an amount of data available for initialization (indicated on a horizontal axis 104) and an accuracy of initial estimates (indicated on a vertical axis 106). The relationship is indicated by curve 102.

Once an object (for example object to be tracked) is detected (and a data structure for tracking the object has been created), then the object (or the data structure) is updated by consecutive measurements. It may be observed that when an object is initialized with state variables (for example velocities, positions, and/or heading angles) with poor accuracy, then it may take a significant amount of time for the Kalman filter to converge the estimated parameters to (or close to) the true values. This may cause the creation of ghost objects and splits or objects that suffer from poor estimation (for example poor heading (angle) estimation) through the whole life (i.e. the whole tracking) of the object. In active safety applications, this may lead to situations that such objects trigger false or late alerts, for example in feature functions like rear collision traffic alerts or lane change assist.

Furthermore, it may be desired in active safety applications that the tracking object is created as soon as possible, so that gathering data for a longer time may not be acceptable. Therefore, in conventional methods, there may be a trade-off between either creating objects late with better accuracy or creating objects more quickly with worse accuracy.

In various situations, it may not be possible to get better initial state estimation, but it may only be possible to delay the initialization to increase the number of detections, but this may result in late object creation which is not preferable. Furthermore, once the object is created, then only slow correction of the state (in other words: tracking data, for example heading) of the objects is available when the state (for example heading) of the object is initialized incorrectly. It may be preferable to have smooth state estimation (for example heading estimation) without overshoots, so that once an object is corrected, the Kalman filter is making slow correction of the state (for example heading). This may lead to incorrect estimation of the state for the whole life of objects or can be the root cause of ghost objects. In conventional methods, the object status may be considered mature from the first moment.

Assumption-based methods for initialization may be provided. The selection between different methods may, for example, depend on the position, velocity, heading of the target object, yaw rate, and/or velocity of the host vehicle. In this way, the type of maneuver or scenario is being identified. Depending on the results of the selection, a different set of equations may be applied for calculation of initial state variables. For example, when the host is stationary and detections from radar from consecutive scans creates a line perpendicular to the host orientation, then lateral assumption (linear regression) is applied. Similarly, when the host is driving straight and detections from the target object are observed as driving in this same direction as the host is driving, then longitudinal assumption may be applied.

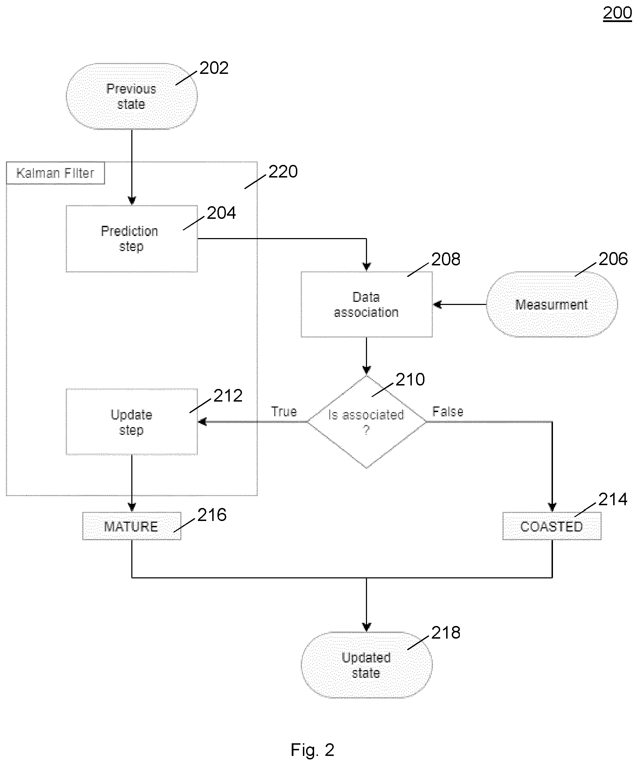

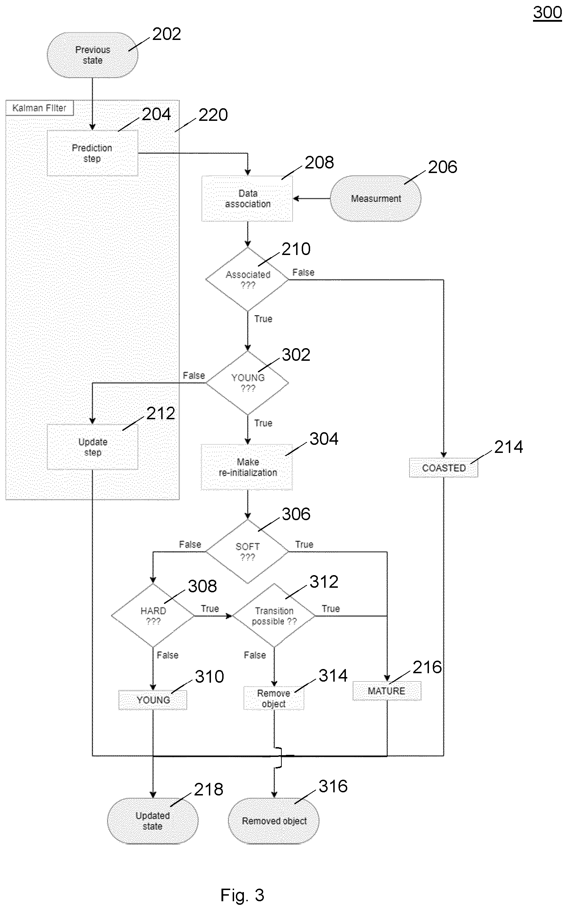

Fig. 2 shows a flow diagram 200 illustrating a method (for example radar tracker method) of updating a state of a tracked object without use of a "young" parameter (Fig. 3 below will illustrate a method with the use of a "young" parameter). Starting from a previous state 202 (which may be an initial state or a random state upon the first execution of the updating), a prediction step 204 may be carried out. Data association 208 may be performed after the prediction step 204, and based on measurement data 206. At 210, it may be determined whether the tracked object can be associated with measurement data 206.

If the object cannot be associated with the measurement data 206, then this may be for example due to the object being temporarily obstructed (i.e. not visible in the measurement data 206), and the object may be treated as coasting in step 214, in order to obtain the updated state 218 assuming a continuing (for example smooth) advance in the state (for example without taking into account the measurement data 206).

If the object can be associated with the measurement data 206, an update step 212 is carried out (for example based on the measurement data 206) in order to obtain the updated state 218, and then the object is treated as mature (216).

The updated state 216 may be taken as previous state 202 for a subsequent iteration of the update method illustrated in Fig. 2.

The prediction step 204 and the update step 212 may be steps of a Kalman filter 220 (or may define or may be the Kalman filter).

Fig. 3 shows a flow diagram 300 illustrating a method for updating a state of a tracked object with use of a "young" parameter according to various embodiments. Various steps of the method illustrated in Fig. 3 are identical or similar to steps of the method illustrated in Fig. 2, so that the same reference signs may be used and duplicate description may be omitted.

If it is determined in step 210 that the measurement data 206 can be associated with the object, then it is determined whether the object is "young" in step 302 (in other words, it is determined whether the status of the object is "young"; in other words: it is determined whether the parameter "young" is assigned to the object).

If the object is not "young", then the update step 212 is carried out. It will be understood that the determination 302 also provides the result that the object is not "young" if the object is coasted (from the previous iteration). In such a situation, the status of the object may be set to "mature".

At step 304, re-initialization may be performed, for example by involving further measurement data, and by giving the further measurement data more weight or more influence compared to measurement data used in the update step 212 (in other words: the re-initialization 304 may change the state more aggressively than the update step 212).

For example, at each cycle when the update step 212 is performed, then the object state is corrected only by measurement from the current cycle (without using measurements from previous cycles for the updated). Thus, the updated state may be obtained only based on filtering, which is calibrated to be smooth to prevent sharp jumps of objects states.

In case of the re-initialization 304, the all gathered so far measurements (of the present cycle and one or more of the preceding cycles, for example in form of an array) are used to do initialization again. This may lead to abrupt jump in object states but those states may be closer to the real object.

It will be understood that a cycle may refer to one run of the steps illustrated in Fig. 3, and may also be referred to as one iteration (for example in a method of iteratively repeating the method illustrated in Fig. 3).

At 306, it may be determined whether a first criterion (which may be referred to as a "soft" criterion) is met. If the first criterion is met, the object status may be set to "mature" at step 216 (in other words, the parameter "mature" may be assigned to the object). If the first criterion is not met, processing may proceed at step 308.

The first criterion ("soft" criterion) may be provided to speed up object initialization. Each time when the object is re-initialized (or just initialized), additional checks are performed to verify if current parameters of object are good enough to leave status "young". For example, the first criterion may be related to acceptable estimated variance of the state (or each component of the state) of the object. If the variance is low enough, then the tracker may carry out the transition from "young" to "mature" in step 216.

At 308, it may be determined whether a second criterion (which may be referred to as a "hard" criterion) is met. If the second criterion is not met, then the object may stay in a "young" status (step 310). If the second criterion is met, then processing may proceed at step 312.

The second criterion may be used to check if the tracker does not extend software and hardware limitations. The second criterion may for example be related to free space in buffer for gathering measurement data, or an upper limit of number of cycles (or iterations) that object is in status "young" to avoid keeping an object in this status forever. Once the tracker passes the second criterion, it must be decided (for example in step 312) whether to keep the object (and proceed to status "mature") or to remove the object.

At 312, it may be determined whether a transition to status "mature" is possible for the object. If transition to status "mature" is possible, then the status of the object may be set to "mature" in 216. If transition to status "mature" is not possible, then the object may be removed from tracking in 314, so as to result in that the object is removed 316.

The first criterion may be provided to speed up object creation, but the requirements of the first criterion for that are more restricted than the second criterion. Thus, it may be possible to create an object with status "mature" because of reaching the second criterion, even though its estimated state would not pass the first criterion.

The method illustrated in Fig. 3 may exceed the performance of the method illustrated in Fig. 2, in particular at the beginning of object creation (i.e. in a stage in which objects are just started to being tracked, so that the (initial) state estimates may not be very accurate yet).

The method illustrated in Fig. 2 operates on only two statuses (in other words: with one of two parameters), on object level, and the parameters are "mature" and "coasted". Once the object is created, in the method of Fig. 2, its status is "mature". It can be changed to "coasted" in case when there is no measurement data (in other words: when measurement data 206 may not be associated with the object).

An object in status "mature" 216 is fully updated by Kalman filter (prediction step and update step) and in status "coasted" 214 it can be only predicted (due to the lack of measurement, which means that only the prediction step 204 can be performed).

Thus, if an object is wrongly initialized (for example regarding position, heading, and/or velocities), it may take longer time to get correct estimated parameters with the method of Fig. 2 than with the method of Fig. 3.

With the method of Fig. 3, the tracker (i.e. the system carrying out the method illustrated in Fig. 3) may perform re-initialization by adding a new status (which may be called "young"). When the object is created, then the tracker may set the object status to "young". At each next cycle, when the object is in this status, no Kalman update is performed, but additional measurement is collected and then re-initialization of object is done with this additional measurement. This may allow the tracker for a more aggressive update of the object and may give the tracker more chance for better object initialization.

The object may keep the status "young" until the tracker decides to change it to "mature" or "coasted". Two types of criteria may be provided to make this decision: "soft" and "hard", as described above.

It will be understood that "status" is different from "state". "Status" refers to the parameter assigned to an object (for example "young", "mature", or "coasted"). "State" refers to the state of the object, for example the linear velocity, angular velocity, heading angle, height, speed, and/or acceleration.

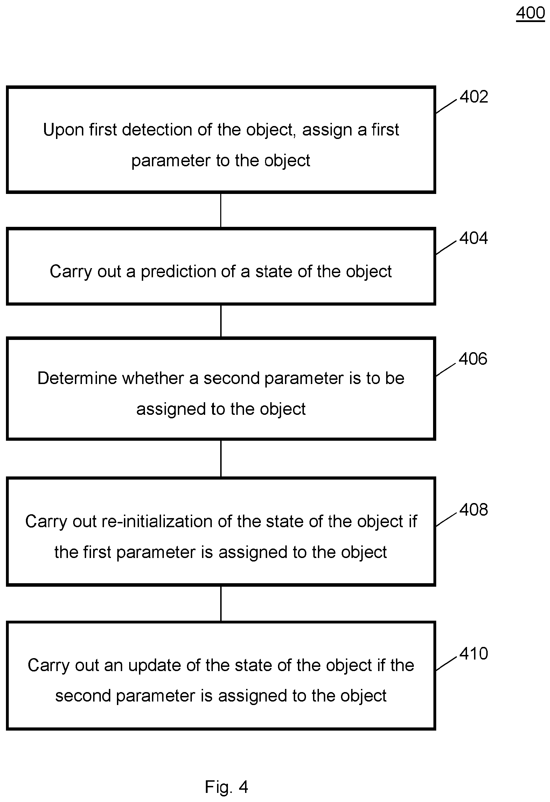

Fig. 4 shows a flow diagram 400 illustrating a method for tracking an object according to various embodiments. At 402, upon first detection of the object, a first parameter may be assigned to the object. At 404, a prediction of a state of the object may be carried out. At 406, it may be determined whether a second parameter is to be assigned to the object. At 408, re-initialization of the state of the object may be carried out if the first parameter is assigned to the object. At 410, an update of the state of the object may be carried out if the second parameter is assigned to the object.

According to various embodiments, it may be determined whether measurement data can be associated with the object, and a third parameter may be assigned to the object if the measurement data cannot be associated with the object.

According to various embodiments, the re-initializing may be based on carrying out measurements related to the object.

According to various embodiments, it may be determined whether a first condition is fulfilled based on the re-initializing.

According to various embodiments, if the first condition is fulfilled, the second parameter may be assigned to the object.

According to various embodiments, if the first condition is not fulfilled, it may be determined whether a second condition is fulfilled.

According to various embodiments, the second condition may be based on computational resources available for the tracking of the object.

According to various embodiments, the second condition may be based on a time since the first parameter was assigned to the object.

According to various embodiments, if the second condition is fulfilled, it may be determined whether assignment of the second parameter is possible.

According to various embodiments, if assignment of the second parameter is not possible, the object may be ignored.

According to various embodiments, various steps of the method may be carried out iteratively.

According to various embodiments, the prediction and the update may be included in a Kalman filter.

Each of the steps 402, 404, 406, 408, 410 and the further steps described above may be performed by computer hardware components.

### Reference numeral list

- 100: illustration of a relationship between an amount of data available for initialization and an accuracy of initial estimates
- 102: curve
- 104: horizontal axis
- 106: vertical axis

- 200: flow diagram illustrating a method of updating a state of a tracked object without use of a "young" parameter
- 202: previous state
- 204: prediction step
- 206: measurement data
- 208: data association
- 210: determination step
- 212: update step
- 214: coasted status
- 216: mature status
- 218: updated state
- 220: Kalman Filter

- 300: flow diagram illustrating a method for updating a state of a tracked object with use of a "young" parameter according to various embodiments
- 302: determination step
- 304: re-initialization
- 306: determination step
- 308: determination step
- 310: young status
- 312: determination step
- 314: step of removing from tracking
- 316: object removed

- 400: flow diagram illustrating a method for tracking an object according to various embodiments
- 402: step of, upon first detection of the object, assigning a first parameter to the object
- 404: step of carrying out a prediction of a state of the object
- 406: step of determining whether a second parameter is to be assigned to the object
- 408: step of carrying out re-initialization of the state of the object if the first parameter is assigned to the object
- 410: step of carrying out an update of the state of the object if the second parameter is assigned to the object

## Claims

1. Computer implemented method for tracking an object,
the method comprising the following steps carried out by computer hardware components:
- upon first detection of the object, assigning (402) a first parameter (310) to the object to set the status of the object young;
- carrying out (404) a prediction of a state of the object;
- determining (406) whether a second parameter (216) is to be assigned to the object, the second parameter being used to set the status of the object mature;
- carrying out (408) re-initialization of the state of the object if the first parameter (310) is assigned to the object;
- carrying out (410) an update of the state of the object if the second parameter (216) is assigned to the object;
- determining whether measurement data can be associated with the object; and
- assigning a third parameter (214) to the object if the measurement data cannot be associated with the object, the third parameter being used to set the status of the object coasted, wherein the object is treated as behaving in a smooth manner or continuous manner or steady manner or differentiable manner, and the update of the state of the object is carried out on the assumption of this manner;
- each time when the object is re-initialized, determining whether a first condition is fulfilled, comprising verifying if the current parameter of the object is good enough to leave the status young;
- if the first condition is fulfilled, assigning the second parameter (310) to the object; and
- if the first condition is not fulfilled, determining whether a second condition is fulfilled, wherein the second condition is based on computational resources available for the tracking of the object;
wherein tracking the object with the first parameter assigned is computationally more expensive than tracking the objects with the second parameter assigned, so that assigning the second parameter to the object provides relief from computational efforts.

2. The computer implemented method of claim 1,
wherein the re-initializing is based on carrying out measurements related to the object.

3. The computer implemented method of at least one of claims 1 or 2,
wherein the second condition is based on a time since the first parameter (310) was assigned to the object.

4. The computer implemented method of at least one of claims 1 to 3, further comprising the following step carried out by the computer hardware components:
if the second condition is fulfilled, determining whether assignment of the second parameter (216) is possible, wherein determining whether assignment of the second parameter (216) is possible comprises a check to determine whether there are enough good measurements to assign the second parameter (216) in order to avoid creating low quality objects.

5. The computer implemented method of claim 4, further comprising the following step carried out by the computer hardware components:
if assignment of the second parameter (216) is not possible, ignoring the object.

6. The computer implemented method of at least one of claims 1 to 5,
wherein various steps of the computer implemented method are carried out iteratively.

7. The computer implemented method of at least one of claims 1 to 6,
wherein the prediction and the update are comprised in a Kalman filter.

8. Computer system, the computer system being configured to carry out the computer implemented method of at least one of claims 1 to 7.

9. Vehicle, comprising at least a portion of the computer system of claim 8.

10. Non-transitory computer readable medium comprising instructions for carrying out the computer implemented method of at least one of claims 1 to 7.

## Patentansprüche

1. Computerimplementiertes Verfahren zum Verfolgen eines Objekts,
wobei das Verfahren die folgenden durch Computerhardwarekomponenten ausgeführten Schritte umfasst:
- bei einer ersten Detektion des Objekts, Zuweisen (402) eines ersten Parameters (310) zu dem Objekt, um den Status des Objekts auf jung zu setzen;
- Durchführen (404) einer Vorhersage eines Zustands des Objekts;
- Bestimmen (406), ob dem Objekt ein zweiter Parameter (216) zuzuweisen ist, wobei der zweite Parameter verwendet wird, um den Status des Objekts auf reif zu setzen;
- Durchführen (408) einer Reinitialisierung des Zustands des Objekts, wenn dem Objekt der erste Parameter (310) zugewiesen ist;
- Durchführen (410) einer Aktualisierung des Zustands des Objekts, wenn dem Objekt der zweite Parameter (216) zugewiesen ist;
- Bestimmen, ob Messdaten dem Objekt zugeordnet werden können; und
- Zuweisen eines dritten Parameters (214) zu dem Objekt, wenn die Messdaten dem Objekt nicht zugeordnet werden können, wobei der dritte Parameter verwendet wird, um den Status des Objekts auf freilaufend zu setzen, wobei das Objekt als sich auf eine glatte Weise oder auf eine kontinuierliche Weise oder auf eine stationäre Weise oder auf eine differenzierbare Weise verhaltend behandelt wird, und die Aktualisierung des Zustands des Objekts unter der Annahme dieser Weise durchgeführt wird;
- jedes Mal, wenn das Objekt reinitialisiert wird, Bestimmen, ob eine erste Bedingung erfüllt ist, umfassend das Überprüfen, ob der aktuelle Parameter des Objekts gut genug ist, um den Status jung zu verlassen;
- wenn die erste Bedingung erfüllt ist, Zuweisen des zweiten Parameters (310) zu dem Objekt; und
- wenn die erste Bedingung nicht erfüllt ist, Bestimmen, ob eine zweite Bedingung erfüllt ist, wobei die zweite Bedingung auf für das Verfolgen des Objekts verfügbaren Rechenressourcen basiert;
wobei das Verfolgen des Objekts mit zugewiesenem ersten Parameter rechenaufwändiger ist als das Verfolgen der Objekte mit zugewiesenem zweiten Parameter, so dass das Zuweisen des zweiten Parameters zu dem Objekt eine Rechenaufwandentlastung bereitstellt.

2. Computerimplementiertes Verfahren nach Anspruch 1,
wobei das Reinitialisieren auf dem Durchführen von Messungen in Bezug auf das Objekt basiert.

3. Computerimplementiertes Verfahren nach zumindest einem der Ansprüche 1 oder 2,
wobei die zweite Bedingung auf einer Zeit seit einer Zuweisung des ersten Parameters (310) an das Objekt basiert.

4. Computerimplementiertes Verfahren nach zumindest einem der Ansprüche 1 bis 3, ferner umfassend den folgenden durch die Computerhardwarekomponenten ausgeführten Schritt:
wenn die zweite Bedingung erfüllt ist, Bestimmen, ob das Zuweisen des zweiten Parameters (216) möglich ist, wobei das Bestimmen, ob das Zuweisen des zweiten Parameters (216) möglich ist, eine Prüfung umfasst, um zu bestimmen, ob genügend gute Messungen vorhanden sind, um den zweiten Parameter (216) zuzuweisen, um das Erzeugen von Objekten niedriger Qualität zu vermeiden.

5. Computerimplementiertes Verfahren nach Anspruch 4, ferner umfassend den folgenden durch die Computerhardwarekomponenten ausgeführten Schritt:
wenn das Zuweisen des zweiten Parameters (216) nicht möglich ist, Ignorieren des Objekts.

6. Computerimplementiertes Verfahren nach zumindest einem der Ansprüche 1 bis 5,
wobei verschiedene Schritte des computerimplementierten Verfahrens iterativ durchgeführt werden.

7. Computerimplementiertes Verfahren nach zumindest einem der Ansprüche 1 bis 6,
wobei die Vorhersage und die Aktualisierung in einem Kalman-Filter umfasst sind.

8. Computersystem, wobei das Computersystem ausgestaltet ist, um das computerimplementierte Verfahren nach zumindest einem der Ansprüche 1 bis 7 durchzuführen.

9. Fahrzeug, umfassend zumindest einen Teil des Computersystems nach Anspruch 8.

10. Nicht-transitorisches durch einen Computer lesbares Medium, umfassend Anweisungen zum Durchführen des computerimplementierten Verfahrens nach zumindest einem der Ansprüche 1 bis 7.

## Revendications

1. Procédé mis en œuvre par ordinateur pour le suivi d'un objet,
le procédé comprenant les étapes suivantes exécutées par des composants matériels d'ordinateur :
- lors d'une première détection de l'objet, affecter (402) un premier paramètre (310) à l'objet pour définir l'état de l'objet comme initial ;
- effectuer (404) une prédiction d'un état de l'objet ;
- déterminer (406) si un deuxième paramètre (216) doit être affecté à l'objet, le deuxième paramètre étant utilisé pour définir l'état de l'objet comme confirmé ;
- effectuer (408) une réinitialisation de l'état de l'objet si le premier paramètre (310) est affecté à l'objet ;
- effectuer (410) une mise à jour de l'état de l'objet si le deuxième paramètre (216) est affecté à l'objet ;
- déterminer si des données de mesurage peuvent être associées à l'objet ; et
- affecter un troisième paramètre (214) à l'objet si les données de mesurage ne peuvent pas être associées à l'objet, le troisième paramètre étant utilisé pour définir l'état de l'objet comme extrapolé, dans lequel l'objet est traité comme se comportant d'une manière lisse ou d'une manière continue ou d'une manière stable ou d'une manière différentiable, et la mise à jour de l'état de l'objet est effectuée en supposant cette manière ;
- à chaque fois que l'objet est réinitialisé, déterminer si une première condition est remplie, comprenant la vérification de ce que le paramètre actuel de l'objet est suffisamment bon pour quitter l'état initial ;
- si la première condition est remplie, affecter le deuxième paramètre (310) à l'objet ; et
- si la première condition n'est pas remplie, déterminer si une deuxième condition est remplie, la deuxième condition étant basée sur des ressources de calcul disponibles pour le suivi de l'objet ;
dans lequel le suivi de l'objet avec le premier paramètre affecté est plus coûteux en calcul que le suivi des objets avec le deuxième paramètre affecté, de sorte que l'affectation du deuxième paramètre à l'objet procure un allègement des efforts de calcul.

2. Procédé mis en œuvre par ordinateur selon la revendication 1,
dans lequel la réinitialisation est basée sur le fait d'effectuer des mesurages relatifs à l'objet.

3. Procédé mis en œuvre par ordinateur selon l'une au moins des revendications 1 ou 2,
dans lequel la deuxième condition est basée sur une durée depuis que le premier paramètre (310) a été affecté à l'objet.

4. Procédé mis en œuvre par ordinateur selon l'une au moins des revendications 1 à 3, comprenant en outre l'étape suivante exécutée par les composants matériels d'ordinateur :
si la deuxième condition est remplie, déterminer si l'affectation du deuxième paramètre (216) est possible, la détermination de ce que l'affectation du deuxième paramètre (216) est possible comprend une vérification visant à déterminer s'il existe suffisamment de bons mesurages pour affecter le deuxième paramètre (216) afin d'éviter de créer des objets de faible qualité.

5. Procédé mis en œuvre par ordinateur selon la revendication 4, comprenant en outre l'étape suivante exécutée par les composants matériels d'ordinateur :
si l'affectation du deuxième paramètre (216) n'est pas possible, ignorer l'objet.

6. Procédé mis en œuvre par ordinateur selon l'une au moins des revendications 1 à 5,
dans lequel diverses étapes du procédé mis en œuvre par ordinateur sont effectuées de manière itérative.

7. Procédé mis en œuvre par ordinateur selon l'une au moins des revendications 1 à 6,
dans lequel la prédiction et la mise à jour sont comprises dans un filtre de Kalman.

8. Système d'ordinateur, le système d'ordinateur étant configuré pour effectuer le procédé mis en œuvre par ordinateur selon l'une au moins des revendications 1 à 7.

9. Véhicule, comprenant au moins une partie du système d'ordinateur selon la revendication 8.

10. Support non transitoire lisible par ordinateur comprenant des instructions pour effectuer le procédé mis en œuvre par ordinateur selon l'une au moins des revendications 1 à 7.
